# FASCICULE DE BREVET EUROPEEN

(11) **EP 2 019 769 B1**
(45) Date de publication et mention de la délivrance du brevet: **13.01.2010**
(21) Numéro de dépôt: 07731773.3
(22) Date de dépôt: 20.03.2007
(51) Int. Cl.: B60W 30/18, B60W 30/14, B60W 10/02, B60W 10/18

(54) **PROCEDE ET SYSTEME DE COMMANDE DU DEPLACEMENT D'UN VEHICULE A BASSE VITESSE**
VERFAHREN UND VORRICHTUNG ZUR STEUERUNG DER BEWEGUNG EINES FAHRZEUGS MIT NIEDRIGER GESCHWINDIGKEIT
METHOD AND DEVICE FOR CONTROLLING THE DISPLACEMENT OF A VEHICLE AT LOW SPEED

(30) Priorité: 30.03.2006 FR 0602767
(43) Date de publication de la demande: 04.02.2009
(73) Titulaire: Peugeot Citroën Automobiles SA, 78140 Vélizy-Villacoublay (FR)
(72) Inventeur: ROCQ, Gaëtan, 78125 La Boissière-Ecole (FR); LAUNAY, Cédric, 78680 Epone (FR); GUERIN, Stéphane, 75013 Paris (FR)
(86) Numéro de dépôt international: PCT/FR2007/050958
(87) Numéro de publication internationale: WO 2007/113423

(56) Documents cités:
- EP-A2- 1 241 064
- DE-A1- 4 118 332
- DE-A1- 19 841 917
- FR-A- 2 868 362
- FR-A1- 2 757 112
- FR-A1- 2 839 927
- GB-A- 2 404 176
- US-A1- 2004 204 285

## Description

La présente invention concerne un procédé et un système de commande du déplacement d'un véhicule à basse vitesse.

Ces procédés s'appliquent aux véhicules équipés d'un moteur de traction et d'au moins un organe d'accélération et d'un organe de freinage directement actionnables par un conducteur afin de commander l'accélération et la décélération du véhicule. Les organes d'accélération et de freinage correspondent typiquement, respectivement, aux pédales d'accélération et de frein.

Il existe des procédés de commande du déplacement d'un véhicule à basse vitesse comportant une phase de déplacement à basse vitesse pendant laquelle un régulateur commande le couple du moteur pour que le véhicule avance automatiquement avec une vitesse, par exemple, strictement supérieure à 0 km/h et inférieure ou égale à 10 km/h sans que le conducteur n'ait à intervenir sur aucun des organes de commande de ce véhicule.

La phase de déplacement à basse vitesse est également connue sous le terme de « rampage ». Le phénomène de « rampage » est bien connu dans les véhicules équipés de boîtes de vitesses automatiques. Dans ces véhicules, à basse vitesse, c'est-à-dire à moins d'environ 10 km/heure, si le conducteur relâche les organes d'accélération et de freinage, le véhicule continue quand même à se déplacer à basse vitesse sans intervention du conducteur. Ceci est dû à un défaut de la boîte de vitesses automatique. Un tel phénomène s'est avéré pratique pour manoeuvrer le véhicule à basse vitesse car le conducteur utilise alors pour cela uniquement un organe de freinage. En particulier, cela facilite les manoeuvres de parcage ou le suivi d'une file de voitures dans un embouteillage. Cependant, lors d'une phase de suivi de file, le rampage généré par une boite de vitesses automatique présente les inconvénients suivants :
- la vitesse du véhicule n'est pas constante en cas d'évolutions d'efforts extérieurs tels que le vent, la pente ou la charge,
- impossibilité de choisir la vitesse de régulation afin de s'adapter au rythme de la circulation,
- pas de désactivation du rampage en cas de freinage ce qui provoque un couple à la roue qui limite l'efficacité du freinage.

La phase de déplacement à basse vitesse reproduit ce phénomène de rampage mais pour des véhicules automobiles dépourvus de boîtes de vitesses automatiques.

Dans des véhicules récemment développés, cette phase de déplacement à basse vitesse est déclenchée automatiquement si le conducteur enfonce la pédale d'accélération au-delà d'une certaine limite. Ensuite, le conducteur peut arrêter la phase de déplacement à basse vitesse en enfonçant la pédale de frein. En pratique, cette façon de déclencher la phase de déplacement à basse vitesse s'est avérée peu pratique pour le conducteur.

Un procédé de l'état de l'art de ce type avec les inconvénients qui viennent d'être mentionnés est notamment décrit dans les documents DE 198 41 917 A et FR-A-2 839 927.

L'invention vise entre autre à remédier à cet inconvénient en proposant un procédé de commande du déplacement d'un véhicule automobile à basse vitesse dans lequel la phase de déplacement du véhicule à basse vitesse est déclenchée d'une autre façon plus pratique.

L'invention a donc pour objet un tel procédé conforme à l'objet de la revendication 1.

Dans le procédé ci-dessus, le déclenchement de la phase de déplacement à basse vitesse ne dépend plus de la position de l'organe d'accélération mais de la vitesse du véhicule. Cela simplifie pour le conducteur la commande du déclenchement de cette phase. De plus, dans le procédé ci-dessus, le déclenchement de la phase de déplacement à basse vitesse peut être rendu insensible à un léger enfoncement de l'organe d'accélération ou de l'organe de freinage.

Les modes de réalisation de ce procédé peuvent comporter une ou plusieurs des caractéristiques suivantes :
- la phase de déplacement à basse vitesse n'est autorisée qu'à partir du moment où la vitesse du véhicule automobile a dépassé, au préalable, un seuil prédéterminé de vitesse strictement supérieur à la limite basse ;
- la phase de déplacement à basse vitesse est interdite à partir du moment où la décélération du véhicule automobile a dépassé un seuil prédéterminé même si les conditions de déclenchement automatique de cette phase sont de nouveau ultérieurement remplies ;
- le procédé comporte une étape de filtrage des consignes de couple établies par le régulateur pour atténuer les variations du couple du moteur causées par le déclenchement ou l'arrêt de la phase de déplacement à basse vitesse.

Ces modes de réalisation du procédé présentent en outre les avantages suivants :
- réguler la vitesse pendant la phase de déplacement à basse vitesse permet de maintenir celle-ci constante, ce qui facilite la manoeuvrabilité du véhicule,
- réguler la vitesse du véhicule en fonction de la vitesse au moment du déclenchement de la phase de déplacement à basse vitesse permet au conducteur d'ajuster simplement la consigne de vitesse,
- réguler la vitesse du véhicule à la valeur de la vitesse au moment du déclenchement de la phase de déplacement à basse vitesse simplifie le réglage de la consigne de vitesse par le conducteur,
- autoriser la phase de déplacement à basse vitesse à partir du moment où la vitesse du véhicule dépasse un seuil prédéterminé évite de déclencher cette phase de façon intempestive et permet de maintenir une bonne manoeuvrabilité du véhicule lors du démarrage, par exemple,
- interdire la phase de déplacement à basse vitesse en cas de brusque décélération évite de déclencher de façon intempestive la phase de déplacement à basse vitesse lors, par exemple, d'un freinage d'urgence,
- atténuer les variations du couple du moteur lors du déclenchement ou de l'arrêt de la phase de déplacement à basse vitesse limite les à-coups ressentis par le conducteur.

L'invention a également pour objet un support d'enregistrement d'informations comportant des instructions pour l'exécution du procédé ci-dessus lorsque ces instructions sont exécutées par un calculateur électronique.

L'invention a également pour objet un dispositif de commande du déplacement d'un véhicule à basse vitesse comportant une unité de commande apte à exécuter le procédé ci-dessus.

L'invention sera mieux comprise à la lecture de la description qui va suivre, donnée uniquement à titre d'exemple non limitatif et faite en se référant aux dessins sur lesquels :
- la figure 1 représente schématiquement un véhicule équipé d'un dispositif de commande du déplacement du véhicule automobile à basse vitesse,
- la figure 2 est un organigramme d'un procédé de déplacement d'un véhicule à basse vitesse,
- les figures 3A à 3D sont des graphes représentant l'évolution au cours du temps de grandeurs physiques du véhicule de la figure 1 lorsque le procédé de la figure 2 est mis en oeuvre.

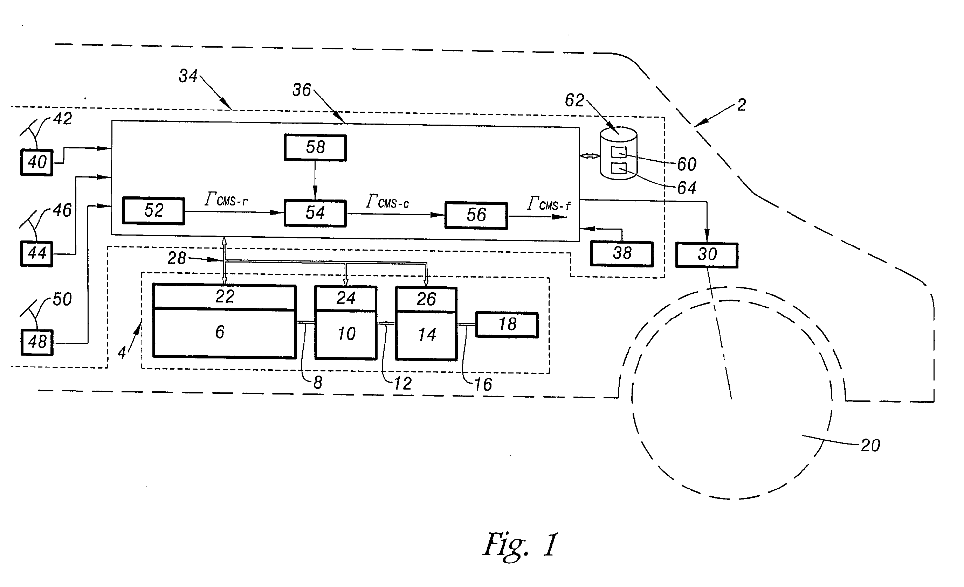

La figure 1 représente un véhicule automobile 2. Ce véhicule est, par exemple, une voiture.

Dans la suite de cette description, les caractéristiques et fonctions bien connues de l'homme du métier ne sont pas décrites en détail.

Le véhicule 2 est équipé d'une chaîne 4 de traction propre à propulser ce véhicule. Cette chaîne 4 comprend :
- un moteur 6 de propulsion tel que, par exemple, un moteur thermique propre à entraîner en rotation un arbre 8 appelé « arbre moteur »,
- un embrayage pilotable 10 propre à accoupler et, en alternance, à désaccoupler mécaniquement l'arbre 8 d'un arbre primaire 12 d'une boîte de vitesses manuelle 14,
- la boîte de vitesses manuelle 14 propre à fixer un rapport de vitesses entre la vitesse angulaire de l'arbre primaire 12 et la vitesse angulaire d'un arbre secondaire 16, et
- un mécanisme 18 de transmission du couple de l'arbre secondaire 16 aux roues motrices du véhicule 2.

Sur la figure 1, seule une roue motrice 20 a été représentée.

Le moteur 6 est connecté à un contrôleur rapproché 22 propre à commander le moteur 6 en fonction d'une consigne de couple à atteindre sur l'arbre 8.

L'embrayage 10 est, par exemple, un embrayage piloté équipé à cet effet d'un contrôleur rapproché 24 propre en réponse à des commandes d'embrayage ou de débrayage à accoupler et, en alternance, à désaccoupler mécaniquement l'arbre 8 de l'arbre 12.

La boîte de vitesses 14 est ici une boîte de vitesse manuelle pilotée. A cet effet, elle est équipée également d'un contrôleur rapproché 26 propre à commander un changement du rapport de vitesses en réponse à la réception d'une commande de changement de vitesse.

Afin de recevoir les différentes consignes ou commandes, les contrôleurs rapprochés 22, 24 et 26 sont raccordés à un bus 28 de transmission d'informations. Le bus 28 est, par exemple, un bus CAN (Controleur Area Network).

Le véhicule 2 est aussi équipé d'un dispositif commandable 30 de freinage du véhicule 2. Ce dispositif 30 est apte à exercer un couple de freinage sur un arbre d'entraînement en rotation des roues du véhicule. Typiquement, le dispositif 30 freine les roues du véhicule 2 par frottement entre d'une part un disque solidaire de l'arbre d'entraînement des roues et d'autre part des patins propres à exercer une pression réglable sur ce disque.

Le véhicule 2 est également équipé d'un dispositif 34 de commande du déplacement du véhicule 2 à basse vitesse. Ce dispositif 34 comprend une unité 36 de commande des différents éléments de la chaîne de traction ainsi que des capteurs embarqués dans le véhicule 2 connectés à cette unité 36.

Ici, le dispositif 34 comprend :
- un capteur 38 de la vitesse du véhicule 2,
- un capteur 40 de la position d'une pédale 42 d'embrayage,
- un capteur 44 de la position d'une pédale 46 de frein, et
- un capteur 48 de la position d'une pédale 50 d'accélération.

Ces pédales 42, 46 et 50 sont directement actionnables par un conducteur.

Ici, la position de la pédale 46 détermine le couple de freinage exercé par le dispositif 30.

L'unité 36 est connectée au bus 28 de manière à pouvoir transmettre des consignes et des commandes aux différents contrôleurs rapprochés de la chaîne 4.

Plus précisément, l'unité 36 implémente :
- un régulateur 52 de la vitesse du véhicule 2 propre à établir une consigne de couple Γ _{cns-r} pour le moteur,
- un limiteur 54 propre à borner la consigne Γ _{cns-r} entre des limites prédéterminées afin d'obtenir une consigne Γ _{cns-c} de couple corrigée, et
- un filtre 56 propre à filtrer la consigne Γ _{cns-c} afin d'obtenir une consigne filtrée Γ _{cns-f} de couple.

Le régulateur 52 établit la consigne de couple Γ _{cns-r} de manière à annuler l'accélération du véhicule 2 dès qu'il est actif. Le régulateur 52 est, par exemple, un régulateur PI (Proportional Integral).

L'unité 36 comprend également un module 58 de calcule d'une consigne Γ _{cns-p} de couple pour le moteur. Contrairement à la consigne Γ _{cns-r}, cette consigne Γ _{cns-p} est établie en fonction de la position de la pédale d'accélération 50 mesurée par le capteur 48. Plus précisément, ici, le module 58 détermine la consigne Γ _{cns-p} à partir de :
- la position de la pédale 50 mesurée par le capteur 48,
- la vitesse du véhicule 2 mesurée par le capteur 38, et
- une cartographie 60 associant pour chaque position de la pédale 50 et chaque vitesse du véhicule 2, une valeur de la consigne Γ _{cns-p} prédéterminée.

La cartographie 60 est enregistrée dans une mémoire 62 connectée à l'unité 36.

L'unité 36 est également apte à appliquer des règles prédéterminées permettant à cette unité de déterminer quelle est la consigne de couple de roues motrices à utiliser à chaque instant. Par exemple, ces règles prédéterminées sont enregistrées dans une base de règles 64 contenue dans la mémoire 60.

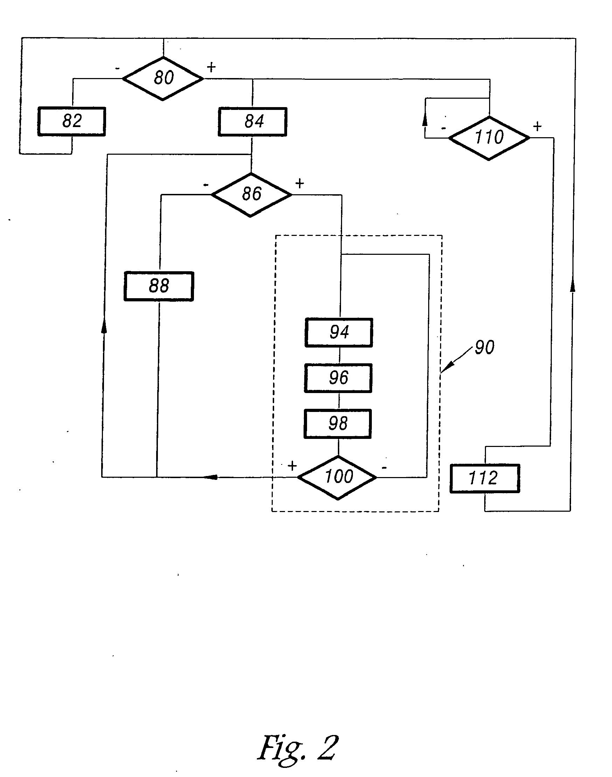

Typiquement, l'unité 36 est réalisée à partir de calculateurs programmables aptes à exécuter des instructions enregistrées sur un support d'enregistrement d'informations. A cet effet, la mémoire 62 comprend des instructions pour l'exécution du procédé de la figure 2 lorsque ces instructions sont exécutées par ce calculateur.

Ici, la base 64 contient les règles suivantes :

### Règle 1 :

Si la vitesse du véhicule 2 dépasse un seuil Sₐ alors autoriser l'activation d'une phase de déplacement à basse vitesse du véhicule 2.

Ici, une phase de déplacement à basse vitesse désigne une phase pendant laquelle le régulateur 52 commande le couple du moteur 6 pour que le véhicule avance automatiquement avec une vitesse réduite strictement supérieure à 0 km/heure et inférieure ou égale à environ 10 km/heure sans que le conducteur n'ait à intervenir sur aucun organe de commande du véhicule 2. En particulier, lors de cette phase de déplacement à basse vitesse, le véhicule 2 avance automatiquement sans que le conducteur n'ait à agir sur l'une quelconque des pédales 42, 46 ou 50.

### Règle 2 : Déclenchement de la phase de déplacement à basse vitesse:

Si toutes les conditions suivantes sont remplies, alors déclencher la phase de déplacement à basse vitesse :
1) La pédale 46 de frein est dans sa position de repos, c'est-à-dire dans une position dans laquelle le couple de freinage exercé par le dispositif 30 est nul.
2) La vitesse du véhicule est comprise entre une limite basse Lₘᵢₙ et une limite haute Lₘₐₓ, ces limites Lₘᵢₙ et Lₘₐₓ étant comprises entre 0 et 10 km/heure par exemple.
3) La décélération du véhicule 2 est inférieure à un seuil prédéterminé S_{dec}, et
4) Le couple correspondant à la consigne Γ _{cns-r} est supérieur ou égal au couple correspondant à la consigne Γ _{cns-p}.

Ici, la limite Lₘₐₓ est choisie égale au seuil Sₐ et la limite Lₘᵢₙ est choisie strictement supérieure à zéro.

La condition 3) ci-dessus est utile pour empêcher le déclenchement de la phase de déplacement à basse vitesse en cas de freinage d'urgence.

La condition 4) permet d'éviter de déclencher la phase de déplacement à basse vitesse lorsque le conducteur est en train d'accélérer afin d'atteindre des vitesses nettement supérieures à celle correspondant à un déplacement à basse vitesse.

### Règle 3 : Arrêt de la phase de déplacement à basse vitesse

Si la pédale de frein 46 n'est pas dans sa position de repos ou si le couple correspondant à la consigne Γ _{cns-p} est supérieur au couple correspondant à la consigne Γ _{cns-r} alors arrêter la phase de déplacement à basse vitesse.

### Règle 4 : Révocation de l'autorisation de déplacement à basse vitesse

Si la vitesse du véhicule est inférieure à la limite Lₘᵢₙ ou si la décélération du véhicule est supérieure au seuil S_{dec} alors révoquer l'autorisation de déclencher une phase de déplacement à basse vitesse.

Le fonctionnement du dispositif 34 va maintenant être décrit en regard du procédé de la figure 2.

Après la mise en route du véhicule, lors d'une étape 80, l'unité 36 vérifie en permanence si la phase de déplacement à basse vitesse peut être autorisée conformément à la règle 1. Ainsi, ici, lors de l'étape 80, l'unité 36 vérifie en permanence si la vitesse mesurée par le capteur 38 est supérieure au seuil Sₐ.

Dans le cas où cette vitesse mesurée est inférieure à ce seuil Sₐ, alors l'unité 36 procède à une étape 82 lors de laquelle le couple du moteur 6 est commandé de façon conventionnelle. Par exemple, lors de l'étape 82, la consigne Γ _{cns-p} est envoyée au contrôleur 22. Ainsi, lors de cette étape 82, le couple du moteur 6 est fonction de la position de la pédale d'accélération et de la vitesse du véhicule.

Dans le cas contraire, c'est-à-dire si la vitesse mesurée est supérieure au seuil Sₐ, alors l'unité 36 autorise, lors d'une étape 84, le déclenchement d'une phase de déplacement à basse vitesse. Lors de l'étape 84, cette autorisation est, par exemple, enregistrée dans la mémoire 62.

A l'issue de l'étape 84, lors d'une étape 86, l'unité 36, vérifie alors en permanence si les conditions permettant d'appliquer la règle 2 sont remplies.

Tant que l'une des conditions 1) à 4) n'est pas remplie, l'unité 36 commande le couple du moteur 6 de façon conventionnelle, lors d'une étape 88. Cette étape 88 est, par exemple, identique à l'étape 82.

Dès que les conditions 1) à 4) de la règle 2 sont simultanément remplies, l'unité 36 déclenche immédiatement une phase 90 de déplacement à basse vitesse du véhicule 2.

Dès le déclenchement de la phase 90, lors d'une étape 94, le régulateur 52 calcule la valeur de la consigne Γ _{cns-r} permettant d'obtenir un couple du moteur propre à maintenir constante et nulle l'accélération du véhicule 2 quelle que soit l'évolution des efforts extérieurs. La vitesse du véhicule est par conséquent maintenue constante.

Chaque consigne Γ _{cns-r} calculée est ensuite transmise au limiteur 54 qui modifie la valeur de la consigne Γ _{cns-r} afin de la maintenir entre des limites prédéterminées Γ ₘᵢₙ et Γ ₘₐₓ. La limite Γ ₘₐₓ est, par exemple, constante et égale à 700 N.n.

Ici, la limite Γ ₘᵢₙ est choisie égale à la valeur de la consigne Γ _{cns-p} calculée à partir de la position de la pédale 50. Si la valeur de la consigne Γ _{cns-r} dépasse la limite Γ ₘₐₓ alors le limiteur 54 affecte la valeur de cette limite à la consigne Γ _{cns-c}. De façon similaire, si la valeur de la consigne Γ _{cns-r} est inférieure à la valeur de la limite Γ ₘᵢₙ, alors le limiteur 54 affecte la valeur de la limite Γ ₘᵢₙ à la consigne Γ _{cns-c}. Enfin, si la valeur de la consigne Γ _{cns-r} est comprise entre les valeurs des limites Γ ₘᵢₙ et Γ ₘₐₓ, alors la valeur de la consigne Γ _{cns-c} est égale à la valeur de la consigne Γ _{cns-r}.

Enfin, lors d'une étape 98, la consigne Γ _{cns-c} est filtrée par le filtre 56 afin d'obtenir la consigne Γ _{cns-f}. Le filtre 56 est apte à limiter les variations brusques du couple du moteur 6. Par exemple, le filtre 56 est un filtre passe bas.

Finalement, la consigne Γ _{cns-f} est envoyée au contrôleur rapproché 22 par l'intermédiaire du bus 28. Le contrôleur 22 asservit alors le couple du moteur 6 sur cette consigne.

La phase 90 se poursuit tant que les conditions pour appliquer la règle 3 ne sont pas remplies. Par exemple, ici, à l'issue de l'étape 98, lors d'une étape 100, l'unité 36 vérifie si les conditions pour appliquer la règle 3 sont remplies. Dans la négative, les étapes 92 à 98 sont réitérées. Dans l'affirmative, la phase 90 s'arrête et le procédé retourne à l'étape 86.

En parallèle aux étapes 84 à 100, lors d'une étape 110, l'unité 36 vérifie en permanence si les conditions de la règle 4 pour révoquer l'autorisation de déclencher une phase de déplacement à basse vitesse sont remplies.

Tant que l'autorisation de déclencher une phase de déplacement à basse vitesse n'est pas révoquée, le procédé se déroule comme décrit en regard des étapes 84 à 100.

Par contre, si les conditions pour appliquer la règle 4 sont remplies, lors d'une étape 112, l'unité 36 révoque l'autorisation de déclencher la phase 90. Par exemple, lors de l'étape 112, l'unité 34 efface l'autorisation qui avait été précédemment enregistrée dans la mémoire 62.

Dès que cette autorisation a été révoquée, le procédé retourne à l'étape 80.

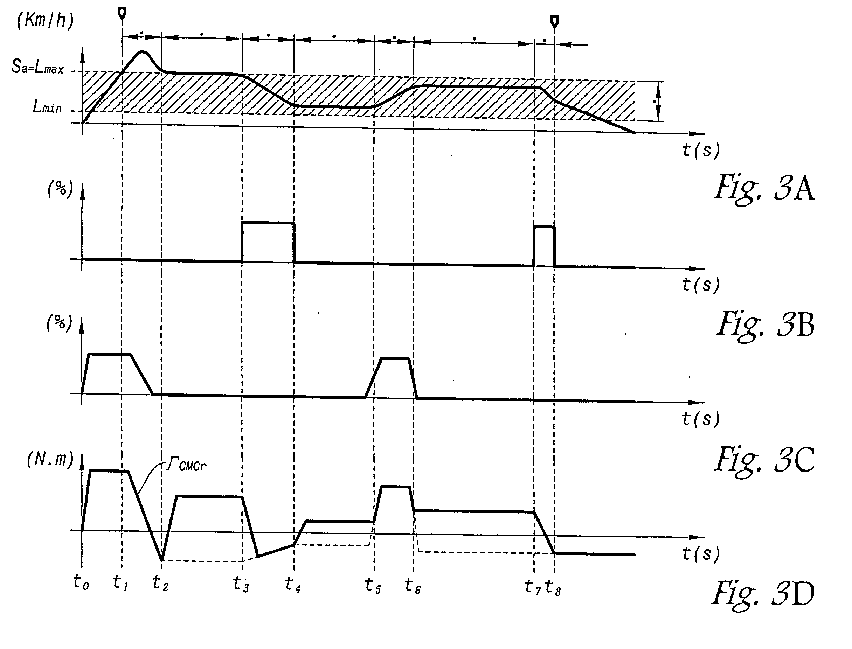

Un exemple de mise en oeuvre du procédé de la figure 2 va maintenant être décrit en regard des figures 3A à 3D.

Les figures 3A à 3D représentent respectivement :
- l'évolution de la vitesse du véhicule 2 au cours du temps,
- la position de la pédale de frein 46,
- la position de la pédale d'accélération 50,
- l'évolution au cours du temps de la valeur des consignes Γ _{cns-f} et Γ _{cns-p}.

Sur la figure 3D, la valeur de la consigne Γ _{cns-f} est représentée en trait plein, tandis que la valeur de la consigne Γ _{cns-p} est représentée en pointillés.

A l'instant t₀, le véhicule est supposé être à l'arrêt et sa vitesse est nulle. A partir de cet instant là, le conducteur enfonce la pédale d'accélération, ce qui se traduit par une augmentation de la valeur mesurée par le capteur 48 comme représenté sur la figure 3C. En parallèle, cela se traduit également par une augmentation de la vitesse du véhicule comme représenté sur la figure 3A.

A l'instant t₁, la vitesse dépasse le seuil Sₐ et l'unité 36 enregistre dans la mémoire 62 une autorisation de déclencher la phase 90.

Ensuite, le conducteur relâche la pédale d'accélération, ce qui se traduit par une chute de la valeur mesurée par le capteur 48 ainsi qu'une diminution de la vitesse. Tant que la vitesse est strictement supérieure à la limite Lₘₐₓ la phase 90 ne peut pas être déclenchée.

A l'instant t₂, on suppose que la vitesse atteint la limite Lₘₐₓ. A cet instant, la pédale de frein est dans sa position de repos et la valeur de la consigne Γ _{cns-r} permettant de maintenir la vitesse du véhicule égale à Lₘₐₓ est supérieure à la valeur de la consigne Γ _{cns-p}. Ainsi; à l'instant t₂ toutes les conditions pour appliquer la règle 2 sont remplies et la phase 90 est donc déclenchée automatiquement. Lors de la phase 90, l'accélération du véhicule est régulée de manière à l'annuler. Ainsi, ici, lors de cette phase 90, la vitesse du véhicule 2 est constamment maintenue égale à la limite Lₘₐₓ.

Ultérieurement, à l'instant t₃, le conducteur enfonce légèrement la pédale de frein ce qui se traduit par l'arrêt de la phase 90.

Entre les instants t₃ et t₄, le conducteur maintient la pédale de frein légèrement enfoncée. Par conséquent, le véhicule décélère et la vitesse diminue.

On suppose ici que, à l'instant t₄ la vitesse est cependant toujours comprise entre les limites Lₘᵢₙ et Lₘₐₓ de sorte qu'à l'instant t₄ lorsque le conducteur relâche la pédale de frein, les conditions pour activer la phase 90 sont de nouveau remplies.

A partir de ce moment là, et jusqu'à un instant t₅, la phase 90 est de nouveau exécutée. Ainsi, entre les instants t₄ et t₅, la vitesse du véhicule est automatiquement maintenue égale à la vitesse que celui-ci avait à l'instant t₄ sans que le conducteur n'ait à agir sur aucun organe de commande du véhicule.

A l'instant t₅, le conducteur enfonce une nouvelle fois la pédale d'accélération afin de provoquer une légère accélération du véhicule 2. En réponse à cet enfoncement de la pédale d'accélération, la valeur de la consigne Γ _{cns-p} devient supérieure à la valeur de la consigne Γ _{cns-r}, ce qui provoque l'arrêt de la phase 90. Entre les instants t₅ et t₆, la vitesse augmente progressivement en réponse à l'enfoncement de la pédale 90. A l'instant t₆, le conducteur relâche la pédale d'accélération. On suppose ici qu'à l'instant t₆, la vitesse du véhicule est encore comprise entre les limites Lₘᵢₙ et Lₘₐₓ. Ainsi, à cet instant t₆, les conditions de la règle 2 sont remplies et la phase 90 est de nouveau déclenchée automatiquement. Cette phase 90 est cette fois ci exécutée jusqu'à un instant t₇.

Entre les instants t₇ et t₈, le conducteur enfonce brusquement la pédale de frein 46 afin de provoquer une brusque décélération du véhicule.

A l'instant t₇, l'enfoncement de la pédale de frein provoque l'arrêt immédiat de la phase 90.

On suppose qu'entre les instants t₇ et t₈, la décélération provoquée par le conducteur est supérieure au seuil S_{dec} de sorte que l'unité 36 révoque l'autorisation de déclencher la phase 90. Ainsi, à l'instant t₈, lorsque le conducteur cesse d'enfoncer la pédale de frein, bien que l'ensemble des conditions de la règle 2 soient remplies pour déclencher une nouvelle phase 90, cette phase 90 n'est pas déclenchée puisque l'autorisation de déclencher cette phase a été révoquée. Ainsi, après l'instant t₈, en absence de toute action du conducteur sur les organes de commande du véhicule 2, la vitesse du véhicule décroît progressivement jusqu'à l'arrêt complet de ce véhicule.

On remarquera également que la consigne de couple Γ _{cns-f} varie progressivement lors du déclenchement ou de l'arrêt de la phase 90 ce qui permet d'éviter des à-coups.

De nombreux autres modes de réalisation du dispositif 34 et du procédé de la figure 2 sont possibles. Par exemple, le dispositif 34 a été décrit dans le cas particulier où les organes d'accélération, de freinage et d'embrayage sont des pédales. De tels organes peuvent être réalisés à l'aide d'autres organes que des pédales actionnables par le conducteur tel que, par exemple, à l'aide de boutons, de manettes ou de joysticks.

Dans une variante, la condition 1) ou 4) de la règle 2 peut être supprimée. En particulier, si la condition 1) est supprimée, cela conduit à une certaine robustesse de ces conditions vis-à-vis d'un léger déplacement accidentel de la pédale de frein.

En variante, l'arrêt de la phase 90 est déclenché uniquement si le couple de freinage correspondant à la position de la pédale de frein est supérieur à un seuil prédéterminé. Ceci permet notamment de ne pas désactiver immédiatement la phase 90 en cas de léger déplacement accidentel de la pédale de frein.

L'autorisation de déclencher la phase 90 que si le véhicule a, au préalable, dépassé un seuil de vitesse prédéterminé permet de laisser au conducteur l'opportunité de commander lui-même un déplacement à basse vitesse du véhicule sans déclencher la phase 90. Cet avantage procuré par la mise en oeuvre de la règle 1 peut être obtenu indépendamment de la formulation de la règle 2. En particulier, cet avantage peut être obtenu indépendamment de l'utilisation d'une plage de vitesses prédéterminée [Lₘᵢₙ ; Lₘₐₓ] dans la règle 2.

## Revendications

1. Procédé de commande du déplacement d'un véhicule automobile à basse vitesse, ce véhicule étant équipé d'un moteur de traction, d'au moins un organe d'accélération et d'un organe de freinage directement actionnables par un conducteur afin de commander l'accélération et la décélération du véhicule, ce procédé comportant une phase (90) de déplacement à basse vitesse pendant laquelle un régulateur commande le couple du moteur pour que le véhicule avance automatiquement avec une vitesse strictement supérieure à 0 km/h et inférieure ou égale à 10 km/h sans que le conducteur n'ait à intervenir sur aucun des organes de commande de ce véhicule, dans lequel :
- la phase (90) de déplacement à basse vitesse comporte une étape (94) de régulation de la vitesse du véhicule automobile pour minimiser l'écart entre la vitesse du véhicule et une consigne (V_{cns}) constante prédéterminée de vitesse pendant toute cette phase ; la valeur de la consigne (V_{cns}) de vitesse étant fonction de la vitesse du véhicule au moment du déclenchement de la phase de déplacement à basse vitesse ;
- ladite phase de déplacement à basse vitesse étant automatiquement déclenchée en fonction des conditions de déclenchement suivantes :
- la vitesse du véhicule est comprise entre une limite basse Lₘᵢₙ et une limite haute Lₘₐₓ de vitesse, ces limites Lₘᵢₙ et Lₘₐₓ étant comprises entre 0 et 10 km/h,
- le couple du moteur souhaité par le conducteur, déterminé à partir de la position de l'organe d'accélération, est inférieur ou égal, au même instant, au couple commandé par le régulateur pour déplacer automatiquement le véhicule à basse vitesse, et
- la décélération du véhicule commandée en réponse à un déplacement de l'organe de freinage est inférieure ou égale à un seuil de décélération prédéterminé.

2. Procédé selon l'une quelconque des revendications précédentes, dans lequel la phase (90) de déplacement à basse vitesse n'est autorisée qu'à partir du moment où la vitesse du véhicule automobile a dépassé, au préalable, un seuil prédéterminé (Sₐ) de vitesse strictement supérieur à la limite basse Lₘᵢₙ.

3. Procédé selon l'une quelconque des revendications précédentes, dans lequel la phase (90) de déplacement à basse vitesse est interdite à partir du moment où la décélération du véhicule automobile a dépassé un seuil prédéterminé (S_{dec}) même si les conditions de déclenchement automatique de cette phase sont de nouveau ultérieurement remplies.

4. Procédé selon l'une quelconque des revendications précédentes, dans lequel le procédé comporte une étape (98) de filtrage des consignes de couple établies par le régulateur pour atténuer les variations du couple du moteur causées par le déclenchement ou l'arrêt de la phase de déplacement à basse vitesse.

5. Support (62) d'enregistrement d'informations, **caractérisé en ce qu'**il comporte des instructions pour l'exécution d'un procédé selon l'une quelconque des revendications 1 à 4, lorsque ces instructions sont exécutées par un calculateur électronique.

6. Dispositif de commande du déplacement à basse vitesse d'un véhicule automobile, ce véhicule automobile étant équipé d'un moteur (6) de traction, d'au moins un organe (50) d'accélération et d'un organe (46) de freinage directement actionnables par un conducteur afin de commander l'accélération et la décélération du véhicule, **caractérisé en ce que** le dispositif comporte une unité (36) de commande apte à exécuter un procédé de commande du déplacement du véhicule automobile à basse vitesse conforme à l'une quelconque des revendications 1 à 4.

## Claims

1. Method of controlling the displacement of a motor vehicle at low speed, this vehicle being equipped with a propulsion power plant, with at least one acceleration member and one braking member that can be actuated directly by a driver in order to control the acceleration and deceleration of the vehicle, this method involving a phase (90) of displacement at low speed during which phase a regulator controls the torque from the power plant so that the vehicle advances automatically at a speed strictly greater than 0 km/h and less than or equal to 10 km/h without the driver having to operate any of the controls of this vehicle, in which:
- the phase (90) of displacement at low speed includes a step (94) of regulating the speed of the motor vehicle in order to minimize the difference between the speed of the vehicle and a predetermined constant speed setpoint (V_{cns}) throughout this phase; the value of the speed setpoint (V_{cns}) being a function of the speed of the vehicle when the low speed displacement phase was initiated;
- the said phase of low speed displacement being automatically initiated as a function of the following initiation conditions:
- the vehicle speed is contained between a bottom limit Lₘᵢₙ and a top limit Lₘₐₓ on speed, these limits Lₘᵢₙ and Lₘₐₓ being comprised between 0 and 10 km/h,
- the power plant torque desired by the driver, determined from the position of the accelerator member, is less than or equal, at the same instant, to the torque commanded by the regulator in order to automatically displace the vehicle at low speed, and
- the vehicle deceleration commanded in response to a displacement of the braking member is less than or equal to a predetermined deceleration threshold.

2. Method according to any one of the preceding claims, in which the low speed displacement phase (90) is authorized only from the moment that the motor vehicle speed has previously exceeded a predetermined speed threshold (Sₐ) strictly higher than the bottom limit Lₘᵢₙ.

3. Method according to any one of the preceding claims, in which the low speed displacement phase (90) is denied from the moment the motor vehicle deceleration is exceeded a predetermined threshold (S_{dec}) even if the conditions for automatic initiation of this phase are met again later.

4. Method according to any one of the preceding claims, in which the method comprises a step (98) of filtering the torque setpoints devised by the regulator in order to attenuate variations in power plant torque caused by the initiation or discontinuation of the low speed displacement phase.

5. Information recording support (62), **characterized in that** it contains instructions for executing a method according to any one of Claims 1 to 4, when these instructions are executed by an electronic computer.

6. Device for controlling the low speed displacement of a motor vehicle, this vehicle being equipped with a traction power plant (6), with at least one acceleration member (50) and one braking member (46) that can be actuated directly by a driver so as to command the acceleration and deceleration of the vehicle, **characterized in that** the device comprises a control unit (36) capable of executing a method for controlling the displacement of the motor vehicle at low speed according to any one of Claims 1 to 4.

## Patentansprüche

1. Verfahren zur Steuerung des Fahrens eines Kraftfahrzeugs mit niedriger Geschwindigkeit, wobei dieses Fahrzeug mit einem Antriebsmotor, mit mindestens einem Beschleunigungsorgan und mit einem Bremsorgan ausgestattet ist, die direkt von einem Fahrer betätigt werden können, um die Beschleunigung und die Verlangsamung des Fahrzeugs zu steuern, wobei dieses Verfahren eine Phase (90) des Fahrens bei niedriger Geschwindigkeit aufweist, während der ein Regler das Drehmoment des Motors so steuert, dass das Fahrzeug sich automatisch mit einer Geschwindigkeit strikt höher als 0 km/h und geringer als oder gleich 10 km/h fortbewegt, ohne dass der Fahrer auf eines der Steuerorgane dieses Fahrzeugs einwirken muss, bei dem:
- die Phase (90) des Fahrens mit niedriger Geschwindigkeit einen Schritt (94) der Regelung der Geschwindigkeit des Kraftfahrzeugs aufweist, um die Abweichung zwischen der Geschwindigkeit des Fahrzeugs und einem vorbestimmten konstanten Geschwindigkeitssollwert (V_{cns}) während dieser ganzen Phase zu minimieren; wobei die Größe des Geschwindigkeitssollwerts (V_{cns}) von der Geschwindigkeit des Fahrzeugs im Zeitpunkt des Auslösens der Phase des Fahrens mit niedriger Geschwindigkeit abhängt;
- wobei die Phase des Fahrens mit niedriger Geschwindigkeit in Abhängigkeit von den folgenden Auslösebedingungen automatisch ausgelöst wird:
- die Geschwindigkeit des Fahrzeugs liegt zwischen einer Untergrenze Lₘᵢₙ und einer Obergrenze Lₘₐₓ der Geschwindigkeit, wobei diese Grenzen Lₘᵢₙ und Lₘₐₓ zwischen 0 und 10 km/h liegen,
- das vom Fahrer gewünschte Drehmoment des Motors, das ausgehend von der Stellung des Beschleunigungsorgans bestimmt wird, ist im gleichen Zeitpunkt geringer als das oder gleich dem vom Regler gesteuerten Drehmoment, um das Fahrzeug automatisch mit niedriger Geschwindigkeit zu fahren, und
- die als Reaktion auf eine Bewegung des Bremsorgans gesteuerte Verlangsamung des Fahrzeugs ist geringer als eine oder gleich einer vorbestimmten Verlangsamungsschwelle.

2. Verfahren nach dem vorhergehenden Anspruch, bei dem die Phase (90) des Fahrens mit niedriger Geschwindigkeit erst ab dem Zeitpunkt erlaubt wird, in dem die Geschwindigkeit des Kraftfahrzeugs vorher eine vorbestimmte Geschwindigkeitsschwelle (Sₐ) überschritten hat, die strikt über der Untergrenze Lₘᵢₙ liegt.

3. Verfahren nach einem der vorhergehenden Ansprüche, bei dem die Phase (90) des Fahrens mit niedriger Geschwindigkeit ab dem Zeitpunkt verboten ist, in dem die Verlangsamung des Kraftfahrzeugs eine vorbestimmte Schwelle (S_{dec}) überschritten hat, selbst wenn die Bedingungen des automatischen Auslösens dieser Phase später erneut erfüllt sind.

4. Verfahren nach einem der vorhergehenden Ansprüche, bei dem das Verfahren einen Schritt (98) der Filterung der Drehmoment-Sollwerte enthält, die vom Regler erstellt werden, um die Veränderungen des Drehmoments des Motors zu dämpfen, die durch das Auslösen oder Beenden der Phase des Fahrens mit niedriger Geschwindigkeit verursacht werden.

5. Datenaufzeichnungsträger (62), **dadurch gekennzeichnet, dass** er Anweisungen für die Ausführung eines Verfahrens nach einem der Ansprüche 1 bis 4 aufweist, wenn diese Anweisungen von einem elektronischen Rechner ausgeführt werden.

6. Vorrichtung zur Steuerung des Fahrens eines Kraftfahrzeugs mit niedriger Geschwindigkeit, wobei dieses Kraftfahrzeug mit einem Antriebsmotor (6), mindestens einem Beschleunigungsorgan (50) und einem Bremsorgan (40) ausgestattet ist, die direkt vom Fahrer betätigt werden können, um das Beschleunigen und das Verlangsamen des Fahrzeugs zu steuern, **dadurch gekennzeichnet, dass** die Vorrichtung eine Steuereinheit (36) aufweist, die ein Verfahren zum Steuern des Fahrens des Kraftfahrzeugs mit niedriger Geschwindigkeit gemäß einem der Ansprüche 1 bis 4 ausführen kann.
